# EUROPEAN PATENT APPLICATION

(11) **EP 1 109 043 A1**
(43) Date of publication of application: **20.06.2001**
(21) Application number: 00311269.5
(22) Date of filing: 15.12.2000
(51) Int. Cl.: G02B 6/42

(54) **Semiconductor laser module**

(30) Priority: 16.12.1999 JP 35675799
(71) Applicant: NEC CORPORATION, Tokyo (JP)
(72) Inventor: Kanda, Masahiro, c/o NEC Corporation, Minato-ku, Tokyo (JP)
(74) Representative: Moir, Michael Christopher

(57) **Abstract**

A high coupling efficiency is achieved between a semiconductor laser element (1) and an optical fiber (2), as well as low tolerances of securement adjustment, for an asymmetrical beam shape, such as elliptical, of a semiconductor laser beam. A semiconductor laser module, having a semiconductor laser element for emitting light having an elliptical shape, comprises a lens (3) condensing the light of elliptical shape emitted from the semiconductor laser element, and a tapered portion (21) of an optical fiber having a tapered lens at an end face thereof for directing the light which is condensed by said lens into the optical fiber.

## Description

### FIELD OF THE INVENTION

The present invention relates to a semiconductor laser module, and in particular to a semiconductor laser module of 980 nm band having a high coupling efficiency and a high long-term reliability, the adjustment and securement of which is easy on fabrication thereof.

### BACKGROUND OF THE INVENTION

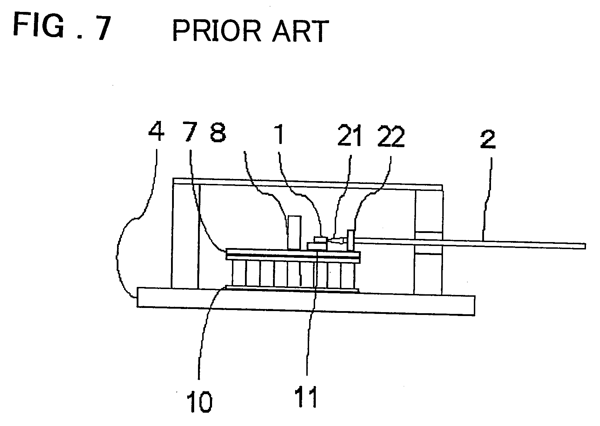

Fig. 7 is a view showing a schematic structure of a prior art semiconductor laser module. Like structural elements are designated by like reference numeral or marks through all drawings. As shown in the drawing, the semiconductor laser module is provided with a semiconductor laser element 1 and an optical fiber 2.

The mode field system of the optical fiber 2 has a shape which is close to a circle.

On the other hand, the semiconductor element 1 emits a laser beam having asymmetric shape and a wave length in the band of 980 nm as mentioned above. The beam is formed into a cross-sectional radiation pattern of an elliptical shape having a vertical radiation angle of 20 to 40 degrees and a horizontal radiation angle of 5 to 15 degrees.

### SUMMARY OF THE DISCLOSURE

Therefore, certain problems have been encountered in the conventional art in the course of investigations toward the present invention. Namely, there is a problem that an excessive loss occurs due to the difference in the cross-sectional shapes between (the beam of) the semiconductor laser element 1 and the optical fiber when they are coupled to each other.

Accordingly, the following analysis is given by the Present invention. Namely, it is possible to make the beam shape close to a circular shape by using an cylindrical lens with respect to the semiconductor laser element 1 for condensing the light only in a vertical direction. However, since the light is not condensed in a horizontal direction, part of the light beam in a horizontal direction is not incident upon the optical fiber 2, so that improvement in the coupling efficiency can not be achieved.

Alternatively, it may be envisaged that the shape of the beam shaping lens or the optical fiber 2 be made into an elliptical cross section. The configuration of the optical system becomes complicated and it is not easy to process or work the optical fiber for shaping or reshaping into the elliptical cross section.

An approach to solve the problem for enhancing the coupling efficiency includes making the end face of the optical fiber 2 into a tapered (wedge-shaped) lens.

In order to enhance the coupling efficiency, the optical fiber 2 is provided at its tip end with a tapered portion 21, which is fabricated by working the end face of the optical fiber 2 so that it is tapered as shown in Fig. 7. Working of the tapered portion 21 may be easily conducted by, for example, Polishing.

Since the semiconductor laser element 1 can be located close to the tapered portion 21 of the optical fiber 2, the fact that light is not condensed in a horizontal direction may be negligible.

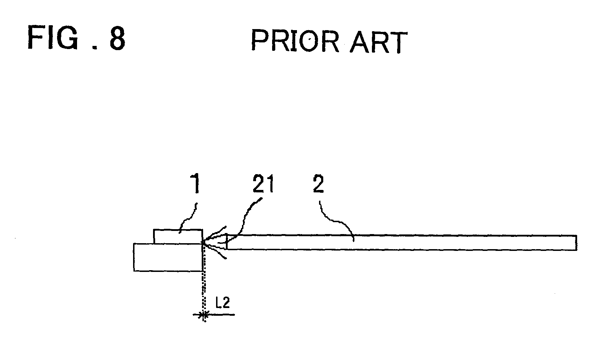

Fig. 8 shows a view explaining an optimal position for coupling between the semiconductor laser element 1 and the optical fiber 2. As shown in the figure, the light which is emitted from the semiconductor laser element 1 is collected or condensed to the tapered portion 21 of the optical fiber 2, so that optical output is taken out to the optical fiber 2.

At this time, the spacing between the semiconductor laser element 1 and the tapered portion 21 in the optical coupling position is determined by (i.e., a function of) a focal length L2 of the tapered portion (a few to several tens of µm) and is very narrow.

However, the spacing L2 between the tapered portion 21 of the optical fiber 2 and the semiconductor laser element 1 is very narrow (a few several tens of µm), so that there is a risk that the semiconductor element 1 may be damaged due to collision between the optical fiber 2 and the semiconductor element 1 when the,optical fiber 2 is adjusted for fixing.

Since the semiconductor laser element 1 is directly coupled to the optical fiber 2, there is a problem that the tolerances on adjustment for fixing should be strict. Therefore, high accuracy is required for the manufacturing facility.

Therefore, with a view to overcoming the above-mentioned problem, it is an object of the preferred embodiments of the present invention to provide a semiconductor laser module having a high coupling efficiency and non-strict tolerances for an asymmetric beam shape, such as an elliptical shape.

In a first aspect of the present invention there is provided a semiconductor laser module having a semiconductor laser element emitting light having an elliptical shape in cross-section, characterized in that said semiconductor laser module comprises: a lens condensing the light having an elliptical shape emitted from the semiconductor laser element; and a tapered portion of an optical fiber, having a tapered lens at an end face thereof, for directing the light which is condensed by said lens into said optical fiber.

High coupling efficiency and low tolerances can be provided by this formulation for asymmetric beam shape such as elliptical shape.

Incorporation of a lens can eliminate the collision of the semiconductor laser element on the optical fiber.

Preferably, said lens has an image magnification factor in the range of about 1 to about 3 and is separated from said semiconductor laser element by a focal length L1, and the tapered portion of the optical fiber is separated from said lens by a distance of the focal length multiplied by the image magnification factor.

The tolerances can be made lower (not stricter) since the spacing between the semiconductor laser element and the lens, and between the lens and the tapered portion, is made wider by a factor of several tens of that between the prior art semiconductor laser element and the optical fiber. Accordingly, high-precision manufacturing facility is not required, so that reduction in cost can be achieved.

High coupling efficiency can be obtained by this formulation.

Preferably, a subpackage is further provided so that it air-tight seals the semiconductor laser element, the lens being accommodated in the subpackage as a part of the subpackage.

Since the spacing between optical components becomes wider by this formulation, air-tight sealing of the semiconductor laser element becomes easier.

Preferably, an image magnification in the range of about 1 to about 3 is achieved by making up the lens from two lenses.

The number of lenses is not limited, and the applicable range can be extended further.

The light of 980 nm emitted from the semiconductor element is exemplary, and the applicable emitted light has an elliptical shape.

### BRIEF DESCRIPTION OF THE DRAWINGS

Preferred features of the present invention will now be described, by way of example only, with reference to the accompanying drawings, in which:-
Fig. 1 is a view showing the schematic structure of the semiconductor laser module of the present invention.
Fig. 2 is a partially enlarged view showing the tapered portion of the optical fiber shown in Fig. 1.
Fig. 3 is a view indicating the relation between the semiconductor laser element, lens and tapered portion of the optical fiber.
Fig. 4 is a view showing a curve of optical system axis offset tolerance.
Fig. 5 is a view showing the schematic structure of the semiconductor laser module in which the air-tight sealing is conducted, which is a modification of that in Fig. 1.
Fig. 6 is a view showing the schematic structure of the semiconductor laser module in which two lenses are provided, which is a modification of that in Fig. 1.
Fig. 7 is a view showing the schematic structure of a prior art semiconductor laser module.
Fig. 8 is a view explaining the optical coupling position between the semiconductor laser element and the optical fiber.

### PREFERRED EMBODIMENTS OF THE INVENTION

Now, modes of embodying the present invention will be described with reference to the drawings.

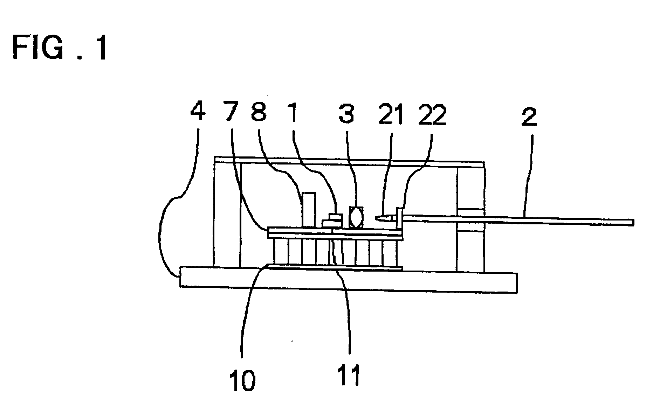

Fig. 1 is a schematic view showing the structure of a semiconductor laser module according to an embodiment of the present invention. As shown in the figure, the semiconductor laser module is provided with a semiconductor laser element 1. The semiconductor element 1 emits a laser beam having asymmetric shape (the shape referred herein relates to the cross sectional shape) and a wave length in the band of 980 nm as mentioned above. The beam is formed into a radiation pattern of an elliptical shape, e.g., having a vertical radiation angle of 20 to 40 degrees and a horizontal radiation angle of 5 to 15 degrees. In other words, the vertical radiation angle generally has a different value from the horizontal radiation angle.

The semiconductor laser element 1 is mounted on a heat sink 11, which is in turn secured to a carrier 7 by soldering.

The carrier 7 is adapted to adjust the temperature of the semiconductor laser element 1 for stabilizing the optical output and the wave length of light emitted from the semiconductor laser element 1.

The carrier 7 is secured to the substrate on the side of an electronic cooler 10 by soldering. The electronic cooler 10 is secured to the inner bottom of a module package 4 by soldering.

A photodiode (PD) 8 and a lens 3 are provided on the carrier 7, so that the photodiode 8 monitors the optical output of the semiconductor laser element 1 and the lens 7 7 condenses light emitted from the semiconductor laser element 1.

The lens 3 has an image magnification m in the range of about 1 to about 3, or alternatively it is disposed to provide such an image magnification. The image magnification depends upon the radiation angle of the semiconductor element 1 and the mode field diameter of the optical fiber 2.

The optical fiber 2 is provided at its tip end with a tapered portion 21 as described above.

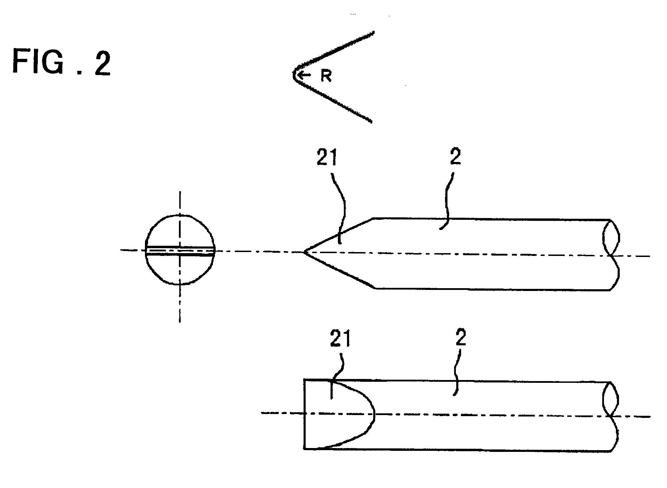

Fig. 2 is an partial enlarged view showing the tapered portion 21 of the optical fiber 2 in Fig. 1. As shown in the drawing, the tapered portion 21 is fabricated in such a manner that the end face of the optical fiber 2 becomes (forms) a tapered lens. The fabrication of the tapered portion can readily be achieved by suitable processing such as polishing.

The tapered portion 21 is fabricated so that the optical fiber 2 has an optimum radius of curvature (R) at its end face depending upon the image magnification m of the lens 3 (1<m<3).

Referring to Fig. 1 again, the optical fiber 2 having the tapered portion 21 is adjusted so that it is coupled with the light from the lens 3 at a high efficiency and is fixed on the carrier 7 through a fiber holder 22.

A space between the module package 4 and the optical fiber 2 is filled with a solder having a low melting point for air-tight sealing. The purpose of the air-tight sealing is to prevent the semiconductor laser element 1 from being affected by temperature.

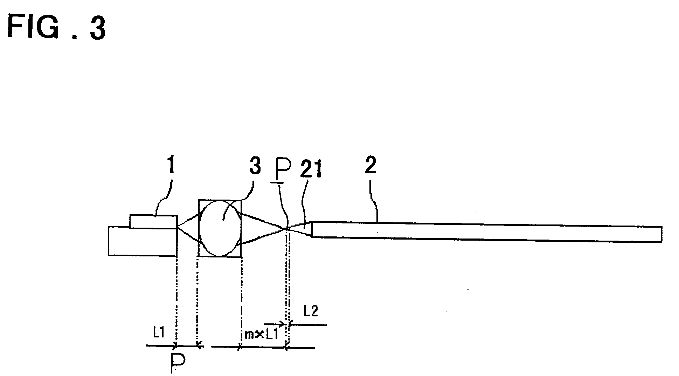

Fig. 3 is a view explaining the relation among the semiconductor laser element 1, lens 3 and tapered portion 21.

As shown in Fig. 3, the light emitted from the semiconductor laser element 1 is transmitted through the lens 3 which is spaced from the semiconductor element 3 by a distance L1 and is condensed at the image magnification m and is focused in a position P which is spaced from the lens by a distance of m × L1.

In this case, the distance between the semiconductor laser element 1 and the lens 3 (L1) is in the range of about 0.2 to 0.5 mm, which is the focal length of the lens 3.

Since the image magnification factor m is not less than about 1 and not higher than about 3, the light is condensed by the tapered portion 21 which is fabricated to provide an optimal radius of the curvature of the end face of the optical fiber 2 depending upon the image magnification factor m, so that it is possible to extract the optical output for the optical fiber 2.

At this time, the distance between the lens 3 and the tapered portion 21 in an optimal coupling position is m × L1, which is much larger than L2. (m × L1 >> L2)

Subsequently, adjustment of alignment of optical axis of the semiconductor laser element, lens 3 and tapered portion 21 is conducted.

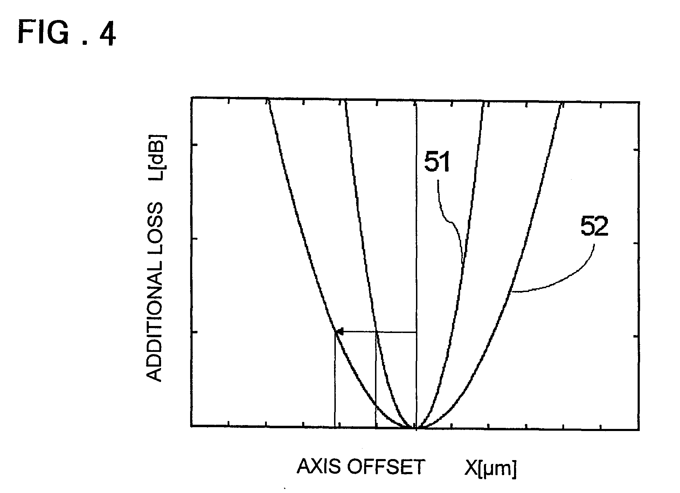

Fig. 4 is a view showing an optical axis offset tolerance curve. As shown in the figure, the tolerance curve 51 is a prior art curve. In contrast to this, the tolerance curve 52 of the inventive optical system is lower by an amount corresponding to the image magnification factor m (about 2 in this figure). Therefore, adjustment for fixing of the optical system becomes easier.

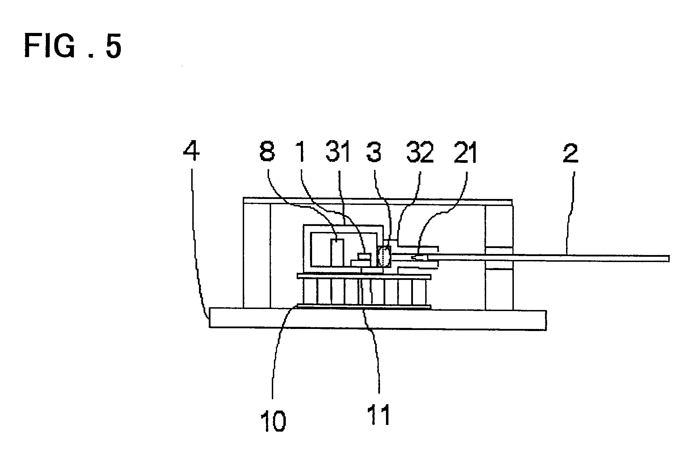

Fig. 5 is a view showing the schematic structure of the semiconductor laser module in which air-tight sealing is conducted, which is a modification of that in Fig. 1.

As shown in the figure, the semiconductor laser module is provided with a subpackage 31. The semiconductor laser element 1 which is secured on the heat sink 11 and the photodiode 8 are mounted in the subpackage 31 in an air-tight sealing condition.

The semiconductor laser module is further provided with a fiber holder 32. A portion of the optical fiber 2 having a tapered portion 21 is secured to the subpackage 31 by means of welding such as using a YAG (Yttrium Aluminium Garnet) laser via the fiber holder 32.

The subpackage 31 to which the optical fiber portion having the tapered portion 21 is secured via the subpackage 32 is further secured to the substrate on the cooling side of the electronic cooler 20 by soldering.

The electronic cooler 10 is secured to the inner bottom of the module package 4 by soldering.

It is to be noted that securing means of the optical fiber 2 is not limited to the above-mentioned manner. The optical fiber 2 may be secured to the carrier 7 similarly to the above-mentioned embodiment.

In such a manner, air-tight sealing of the semiconductor laser element 1 can be easily achieved.

Conventionally, the air-tight sealing is conducted between the optical fiber 2 and the subpackage 31 since the space between the semiconductor laser element 1 and the optical fiber is narrow if there is no lens 3.

In this case, it is necessary to metalize the optical fiber 2 in order to conduct the air-tight sealing by soldering.

A residual stress may occur in the optical fiber 2 on securing of the cooler 10, resulting in that a problem in reliability may occur.

In contrast to this, the present invention makes it possible to conduct the air-tight sealing with the lens 3 since the space between the semiconductor element 1 and the lens 3 or between the lens 3 and the portion of the optical fiber 2 having the tapered portion 21 becomes wider due to the incorporation of the lens 3 in the subpackage 31 as part thereof.

Although the electronic cooler 10 is used in the foregoing embodiment, the module may be of the non cooled type in which no electronic cooler 10 is used if stabilized light output and the wave length can be obtained.

Although the embodiment in which single lens 3 is used has been described, the lens 3 may comprise two lenses such as collimator lenses so that the image magnification m is in the range of about 1 to about 3 as described below.

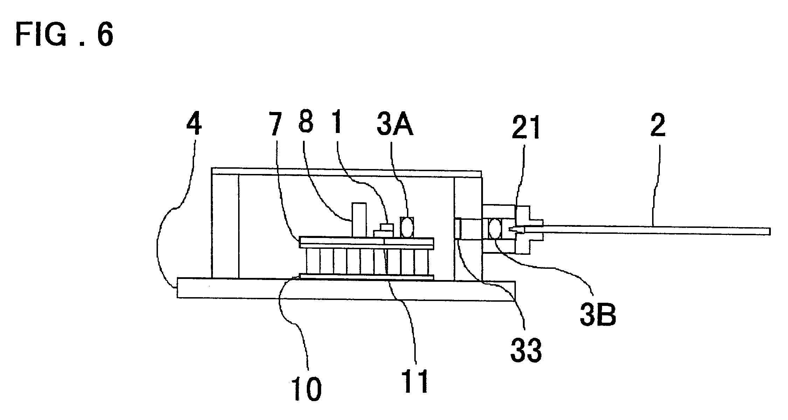

Fig. 6 is a view showing a schematic structure on the semiconductor laser module in which two lenses are provided, which is a modification/variant of that shown in Fig. 1.

As shown in the figure, two (first and second) lenses 3A and 3B, respectively, are provided. The first lens 3A is disposed internally of the module package 4 and the second lens 3B is disposed externally of the module package 4. The module package 4 is provided with a window glass 33 between the first and second lenses 3A and 3B.

Necessity of filling the space between the module package 4 and the optical fiber 2 with a low melting point solder for the air-tight sealing as shown in Fig. 1 is eliminated in such a manner. Occurrence of the residual stress on the optical fiber 2 on securing of the cooler is prevented, so that the reliability is enhanced in an extended period of time.

Although the embodiment in which the semiconductor laser element 1 has the 980 nm band has been described, the present invention is applicable if the semiconductor laser element has a radiation pattern which is elliptical in shape.

In the following, further aspects/embodiments of the present invention are shown.

There is provided another subpackage which receives and secures the tapered portion of the optical fiber and the another subpackage is secured to the subpackage accommodating the lens in an optical alignment.

There is provided first and second subpackages, the first subpackage accommodating the laser element and a first lens, while the second subpackage accommodates a second lens and the tapered portion of the optical fiber.

The first subpackage constitutes a main housing of the semiconductor laser module and has a light exit window to form a sealed space within the first subpackage, the second subpackage being secured to the first subpackage in optical coupling with the light emitted from the first lens.

The meritorious effects of the Present invention are summarized as follows.

Since the beam emitted from the semiconductor laser element is magnified at a magnification in the range of about 1 to about 3 by a lens in accordance with the Present invention as mentioned above, the tolerances of adjusting for securing the optical fiber is mitigated by a factor of about 1 to about 3. Therefore, high-precision fabricating facility becomes unnecessary so that reduction in cost can be achieved.

Since the tolerance of offset of the optical fiber axis is mitigated, the long term reliability is enhanced.

Since the lens is inserted, the semiconductor laser element will not directly collide with the optical fiber, unlike in the prior art.

Since the space between the inserted lens and the semiconductor laser element is several tens of times wider than that between the prior art semiconductor laser element and the optical fiber, the possibility of fracture/failure due to the collision of the semiconductor laser element to the lens becomes very low.

It should be noted that other objects, features and aspects of the present invention should be apparent from the entire disclosure, and that modifications may be made without departing from the scope of the present invention as disclosed herein and as claimed in the appended claims herewith.

Also it should be noted that any combination of the disclosed and/or claimed elements, matters and/or items may fall under the modifications aforementioned.

Each feature disclosed in this specification (which term includes the claims) and/or shown in the drawings may be incorporated in the invention independently of other disclosed and/or illustrated features.

The text of the abstract filed herewith is repeated here as part of the specification.

A high coupling efficiency is achieved between a semiconductor laser element and an optical fiber, as well as low tolerances of securement adjustment, for an asymmetrical beam shape, such as elliptical, of a semiconductor laser beam. A semiconductor laser module, having a semiconductor laser element for emitting light having an elliptical shape, comprises a lens condensing the light of elliptical shape emitted from the semiconductor laser element, and a tapered portion of an optical fiber having a tapered lens at an end face thereof for directing the light which is condensed by said lens into the optical fiber.

## Claims

1. A semiconductor laser module having a semiconductor laser element emitting a beam of light having an asymmetric cross-section, comprising:
a tapered lens condensing the emitted light; and,
a tapered portion of an optical fiber having a tapered lens at an end face thereof, said tapered portion directing the light condensed by said lens into said optical fiber.

2. The semiconductor laser module as defined in Claim 1, wherein said lens has an image magnification factor in a range of about 1 to about 3 and is separated from said semiconductor laser element by a focal length L1, and,
wherein said tapered portion of the optical fiber is separated from said lens by a distance of the focal length multiplied by the image magnification factor.

3. The semiconductor laser module as defined in Claim 1, wherein said tapered portion has an end face having a radius of curvature adapted to said image magnification factor.

4. The semiconductor laser module as defined in Claim 1, wherein a subpackage further provides air-tight sealing of said semiconductor laser element, said lens being accommodated in said subpackage as a part thereof.

5. The semiconductor laser module as defined in Claim 1, wherein an image magnification in the range of about 1 to about 3 is achieved by said lens, said lens being made up of two lenses.

6. The semiconductor laser module as defined in Claim 1,
wherein said semiconductor laser element has an emission wave length band of 980 nm.

7. The semiconductor laser module as defined in Claim 4, wherein there is provided another subpackage which receives and secures said tapered portion of the optical fiber, and said another subpackage is secured to said subpackage accommodating the lens in an optical alignment.

8. The semiconductor laser module as defined in Claim 5, wherein there is provided first and second subpackages, the first subpackage accommodating the laser element and a first lens, while the second subpackage accommodates a second lens and said tapered portion of the optical fiber.

9. The semiconductor laser module as defined in Claim 8, wherein said first subpackage constitutes a main housingof the semiconductor laser module and has a light exit window to form a sealed space within the first subpackage, the second subpackage being secured to the first subpackage in optical coupling with the light emitted from the first lens.

10. A semiconductor laser module as defined in any preceding Claim, wherein the beam of light emitted by the semiconductor laser element has an elliptical shape.
